# EUROPÄISCHE PATENTSCHRIFT

(11) **EP 3 385 109 B1**
(45) Veröffentlichungstag und Bekanntmachung des Hinweises auf die Patenterteilung: **30.12.2020**
(21) Anmeldenummer: 18158590.2
(22) Anmeldetag: 26.02.2018
(51) Int. Cl.: B60L 50/40, B60L 50/60, B60L 3/04, B60L 3/12, B60L 3/00, H02J 7/34, H02J 7/14, H02M 1/32

(54) **SICHERUNGSEINRICHTUNG ZUM REVERSIBLEN ABSCHALTEN WENIGSTENS EINER ELEKTRISCHEN KOMPONENTE EINES KRAFTFAHRZEUGS, KRAFTFAHRZEUG MIT EINER SICHERUNGSEINRICHTUNG SOWIE VERFAHREN ZUM BETREIBEN EINER SICHERUNGSEINRICHTUNG**
SAFETY DEVICE FOR REVERSIBLE SWITCHING OFF AT LEAST ONE ELECTRICAL COMPONENT OF A MOTOR VEHICLE, MOTOR VEHICLE WITH A SAFETY DEVICE AND METHOD FOR OPERATING A SAFETY DEVICE
DISPOSITIF DE SÉCURITÉ PERMETTANT DE COUPER DE MANIÈRE RÉVERSIBLE AU MOINS UN COMPOSANT ÉLECTRIQUE D'UN VÉHICULE AUTOMOBILE, VÉHICULE AUTOMOBILE POURVU D'UN DISPOSITIF DE SÉCURITÉ AINSI QUE PROCÉDÉ DE FONCTIONNEMENT D'UN DISPOSITIF DE SÉCURITÉ

(30) Priorität: 06.04.2017 DE 102017205861
(43) Veröffentlichungstag der Anmeldung: 10.10.2018
(73) Patentinhaber: AUDI AG, 85045 Ingolstadt (DE)
(72) Erfinder: Geiss, Markus, 86650 Wemding (DE); Fey, Steffen, 85120 Hepberg (DE)

(56) Entgegenhaltungen:
- EP-A1- 2 944 502
- EP-A2- 2 860 060
- WO-A1-2013/014768
- DE-A1-102008 063 652
- DE-A1-102012 020 019
- DE-A1-102014 114 682
- DE-A1-102014 220 671
- DE-A1-102015 207 222
- DE-B3-102010 050 347
- US-A1- 2008 197 810
- US-A1- 2010 296 204
- US-A1- 2012 235 473
- US-A1- 2013 234 510
- US-B2- 8 547 060

## Beschreibung

Die Erfindung betrifft eine Sicherungseinrichtung zum reversiblen Abschalten wenigstens einer elektrischen Komponente eines Kraftfahrzeugs. Die Erfindung betrifft weiterhin ein Kraftfahrzeug mit einer Sicherungseinrichtung. Die Erfindung betrifft weiterhin ein Verfahren zum Betreiben einer Sicherungseinrichtung.

Bei Kraftfahrzeugen mit einem elektrischen Antrieb, insbesondere bei Elektrokraftfahrzeugen oder Elektrohybridkraftfahrzeugen, wird eine elektrische Verbindung von elektrischen Komponenten des Kraftfahrzeugs, vorzugsweise von Hochvoltkomponenten, mit einer insbesondere als Akkumulator ausgebildeten Energieversorgungseinheit, vorzugsweise einer Hochvoltbatterie, bei einem Unfall getrennt, um einen Kurzschluss aufgrund einer unfallbedingten Schädigung des Kraftfahrzeugs, insbesondere einer Zerstörung oder Deformation desselben, zu verhindern. Unter einem Kraftfahrzeug wird insbesondere ein Personenkraftwagen oder ein Nutzfahrzeug verstanden. Bei den elektrischen Komponenten der angesprochenen Art handelt es sich insbesondere um einen Antrieb des Kraftfahrzeugs und vorzugsweise weitere Einrichtungen, insbesondere eine Leistungselektronik des Kraftfahrzeugs. Vorzugsweise wird dabei ein Bordnetz des Kraftfahrzeugs, insbesondere ein Hochvoltbordnetz, über welches die elektrischen Komponenten mit Energie versorgt werden, von der Energieversorgungseinheit getrennt.

Die Stand der Technik Dokumente WO2013/014768A1, US2013/234510A1 und EP2860060A2 zeigen Abschalt- und Entladeeinrichtungen für Kraftfahrzeuge für den Fall eines Unfalls.

US2012/235473A1 sowie DE10 2008063652A1 zeigen Schalteinrichtungen zum Zusammenschalten eines Kondensators mit einer Fahrzeugbatterie.

Typischerweise erfolgt eine solche Trennung mittels einer Schalteinrichtung, welche beispielsweise als Schütz ausgebildet ist. Es ist auch möglich, dass die Schalteinrichtung als pyrotechnisches Element insbesondere innerhalb der Energieversorgungseinheit ausgebildet ist. Eine Ansteuerung der Schalteinrichtung erfolgt in der Regel durch ein Airbagsteuergerät. Die Trennung der elektrischen Verbindung der elektrischen Komponenten mit der Energieversorgungseinheit erfolgt bei einem Unfall typischerweise unter Last. Insbesondere bei einer Ausbildung der Schalteinrichtung als Schütz führt diese Trennung typischerweise zu einer Lichtbogenbildung zwischen Kontakten der Schalteinrichtung, was einen hohen Verschleiß bewirkt. Weiterhin ist nach dem Trennen der elektrischen Verbindung das Kraftfahrzeug entweder neu zu starten oder muss in eine Werkstatt zur erneuten Inbetriebnahme gebracht werden.

Aufgrund einer solchen Einschränkung eines Betriebs des Kraftfahrzeugs wird typischerweise eine Sicherungseinrichtung, welche ein Abschalten der elektrischen Komponenten bewirkt oder initiiert, in der Regel sehr robust ausgelegt, so dass eine Trennung der elektrischen Komponenten von der Energieversorgungseinheit, mithin eine Deaktivierung des Bordnetzes, - insbesondere bezüglich einer unfallbedingten Schädigung des Kraftfahrzeugs - verhältnismäßig spät erfolgt. Eine Unfallerkennung in Zusammenhang mit einer solchen Sicherungseinrichtung erfolgt dabei typischerweise mittels einer Sensoreinrichtung, welche insbesondere zur Auslösung von Rückhaltesystemen vorgesehen ist. Aufgrund der angesprochenen verhältnismäßig späten Trennung der elektrischen Komponenten von der Energieversorgungseinheit werden diese Komponenten, insbesondere wenn sie bei einem Unfall mit einer hohen Wahrscheinlichkeit beschädigt werden können, mittels einer aufwändigen Panzerung vor unfallbedingten schädlichen Einwirkungen geschützt, um insbesondere die Gefahr eines durch die Einwirkungen bedingten Kurzschlusses zu verhindern.

Der Erfindung liegt die Aufgabe zugrunde, eine Sicherungseinrichtung zum reversiblen Abschalten wenigstens einer elektrischen Komponente eines Kraftfahrzeugs, ein Kraftfahrzeug mit einer Sicherungseinrichtung sowie ein Verfahren zum Betreiben einer Sicherungseinrichtung zu schaffen, welche gegenüber bekannten Sicherungseinrichtungen, Kraftfahrzeugen und Verfahren Vorteile aufweisen, insbesondere verschleißresistenter sind, einen Betrieb des Kraftfahrzeugs bei einem Unfall oder einem drohenden Unfall weniger beeinträchtigen und ein höheres Maß an Sicherheit bieten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Sicherungseinrichtung zum reversiblen Abschalten wenigstens einer elektrischen Komponente eines Kraftfahrzeugs geschaffen wird, welche eine erste Schalteinrichtung aufweist. Dabei liegt eine elektrische Verbindung einer ersten Energieversorgungseinheit des Kraftfahrzeugs mit der wenigstens einen elektrischen Komponente, insbesondere einem elektrischen Antrieb des Kraftfahrzeugs, in einem ersten Schaltzustand der ersten Schalteinrichtung vor und ist in einem zweiten Schaltzustand der ersten Schalteinrichtung unterbrochen. Es ist dabei vorgesehen, dass die Sicherungseinrichtung eine zweite Schalteinrichtung aufweist, wobei eine elektrische Verbindung einer zweiten Energieversorgungseinheit des Kraftfahrzeugs, welche zu der ersten Energieversorgungseinheit parallel verschaltet und als Kondensator ausgebildet ist, mit der wenigstens einen elektrischen Komponente in einem ersten Schaltzustand der zweiten Schalteinrichtung vorliegt und in einem zweiten Schaltzustand der zweiten Schalteinrichtung unterbrochen ist.

Die Sicherungseinrichtung weist zahlreiche Vorteile gegenüber dem Stand der Technik auf. Dadurch, dass die Sicherungseinrichtung die zweite Schalteinrichtung aufweist, wobei die elektrische Verbindung der zweiten Energieversorgungseinheit des Kraftfahrzeugs, welche zu der ersten Energieversorgungseinheit parallel verschaltet und als Kondensator ausgebildet ist, mit der wenigstens einen elektrischen Komponente in dem ersten Schaltzustand der zweiten Schalteinrichtung vorliegt und in dem zweiten Schaltzustand der zweiten Schalteinrichtung unterbrochen ist, kann insbesondere ein reversibles Abschalten der wenigstens einen elektrischen Komponente in dem Kraftfahrzeug bewirkt werden. Dabei wird ein Verschleiß der ersten und/oder der zweiten Schalteinrichtung gegenüber dem Stand der Technik signifikant reduziert. Insbesondere ist es in vorteilhafter Weise möglich, die elektrische Verbindung der ersten Energieversorgungseinheit mit der wenigstens einen elektrischen Komponente zu trennen, wobei weiterhin ein zumindest zeitweiser Betrieb des Kraftfahrzeugs mittels der zweiten Energieversorgungseinheit möglich ist.

Auf diese Weise kann der Betrieb des Kraftfahrzeugs, zumindest in Bezug auf sicherheitsrelevante Funktionen, auch bei einem Unfall oder einem drohenden Unfall gewährleistet bleiben. Somit kann die Sicherungseinrichtung im Vergleich zum Stand der Technik sensitiver ausgelegt werden, wobei erst bei einer höheren Kritikalität des Kraftfahrzeugs die erste und die zweite Energieversorgungseinheit von der wenigstens einen elektrischen Komponente getrennt werden. Damit kann auf eine Panzerung der elektrischen Komponenten zumindest teilweise verzichtet werden. Ein Verschleiß der ersten und/oder der zweiten Schalteinrichtung wird verringert, vorzugsweise verhindert, wobei die zweite Energieversorgungseinheit insbesondere Stromspitzen bei einem Ändern des Schaltzustands der ersten und/oder der zweiten Schalteinrichtung puffert.

Eine Kritikalität des Kraftfahrzeugs spricht insbesondere die Ausprägung einer Gefährdungslage und/oder die Höhe einer Unfallwahrscheinlichkeit des Kraftfahrzeugs an. Die Kritikalität entspricht insbesondere einem Risiko einer Schädigung des Kraftfahrzeugs, insbesondere der Insassen des Kraftfahrzeugs. Eine höhere Kritikalität entspricht insbesondere einer kritischeren Gefährdungslage beziehungsweise einer höheren Unfallwahrscheinlichkeit. Insbesondere erhöht eine erhöhte momentane Leistung und/oder momentane Leistungsaufnahme des Antriebs des Kraftfahrzeugs die Kritikalität. Eine geringere Kritikalität entspricht insbesondere einer weniger kritischen Gefährdungslage beziehungsweise einer geringeren Unfallwahrscheinlichkeit des Kraftfahrzeugs. Insbesondere verringert eine verringerte momentane Leistung und/oder momentane Leistungsaufnahme des Antriebs die Kritikalität. In anderen Worten ist die Kritikalität umso höher, je größer die momentane Leistung und/oder die momentane Leistungsaufnahme ist beziehungsweise umgekehrt.

Ein reversibles Abschalten der wenigstens einen elektrischen Komponente bezeichnet insbesondere ein mehrfaches Unterbrechen und Wiederherstellen der elektrischen Verbindung der wenigstens einen elektrischen Komponente mit der ersten und/oder der zweiten Energieversorgungseinheit. Ein solches reversibles Abschalten ist insbesondere durch einen verschleißarmen, vorzugsweise verschleißfreien Betrieb der ersten und/oder der zweiten Schalteinrichtung realisierbar.

Bei der wenigstens einen elektrischen Komponente handelt es sich insbesondere um den Antrieb des Kraftfahrzeugs. Vorzugsweise weist das Kraftfahrzeug weitere elektrische Komponenten auf, insbesondere eine Leistungselektronik. Darüber hinaus können weitere elektrische Komponenten vorgesehen sein, insbesondere sicherheitsrelevante Einrichtungen. Vorzugsweise ist die wenigstens eine elektrische Komponente über ein Bordnetz des Kraftfahrzeugs mit der ersten und/oder der zweiten Energieversorgungseinheit mit Energie versorgbar, insbesondere wenn das Bordnetz nicht durch Trennung der elektrischen Verbindung desselben mit den Energieversorgungseinheiten deaktiviert ist.

Vorzugsweise liegt in dem ersten Schaltzustand der ersten Schalteinrichtung die elektrische Verbindung der ersten Energieversorgungseinheit mit der wenigstens einen elektrischen Komponente vor, wobei in dem zweiten Schaltzustand der ersten Schalteinrichtung die elektrische Verbindung der ersten Energieversorgungseinheit mit der wenigstens einen elektrischen Komponente unterbrochen ist. Vorzugsweise liegt in dem ersten Schaltzustand der zweiten Schalteinrichtung die elektrische Verbindung der zweiten Energieversorgungseinheit mit der wenigstens einen elektrischen Komponente vor, wobei in dem zweiten Schaltzustand der zweiten Schalteinrichtung die elektrische Verbindung der zweiten Energieversorgungseinheit mit der wenigstens einen elektrischen Komponente unterbrochen ist.

Vorzugsweise ist/sind die erste Schalteinrichtung und/oder die zweite Schalteinrichtung als Schütz oder als Transistor, insbesondere als Metall-Oxid-Halbleiter-Feldeffekttransistor (MOSFET), ausgebildet oder weisen einen Schütz oder Transistor, insbesondere einen Metall-Oxid-Halbleiter-Feldeffekttransistor (MOSFET), auf. Alternativ können/kann die erste und/oder die zweite Schalteinrichtung anders ausgebildet sein, wobei entscheidend ist, dass eine Funktion gemäß der erfindungsgemäßen Sicherungseinrichtung gewährleistet ist.

Vorzugsweise ist die erste Energieversorgungseinheit als Akkumulator ausgebildet. Unter einem Akkumulator wird insbesondere ein wiederaufladbarer Speicher für elektrische Energie auf elektrochemischer Basis verstanden. Bei der ersten Energieversorgungseinheit handelt es sich insbesondere um einen Hochvoltakkumulator.

Vorzugsweise ist die als Kondensator ausgebildete zweite Energieversorgungseinheit als Superkondensator ausgebildet. Unter einem Superkondensator wird insbesondere ein elektrochemischer Kondensator verstanden. Vorzugsweise wird die zweite Energieversorgungseinheit mittels der ersten Energieversorgungseinheit im Betrieb des Kraftfahrzeugs, aufgeladen, wobei insbesondere eine elektrische Verbindung der ersten und der zweiten Energieversorgungseinheit miteinander vorliegt. Vorzugsweise sind/ist die erste Energieversorgungseinheit und/oder die zweite Energieversorgungseinheit an einem crashsicheren Ort in oder an dem Kraftfahrzeug angeordnet.

Der elektrische Antrieb des Kraftfahrzeugs weist insbesondere einen Elektromotor auf oder ist als Elektromotor ausgebildet.

Eine Weiterbildung der Erfindung sieht vor, dass die Sicherungseinrichtung eine dritte Schalteinrichtung aufweist, wobei durch einen ersten Schaltzustand der dritten Schalteinrichtung eine Entladung der zweiten Energieversorgungseinheit bewirkt wird und durch einen zweiten Schaltzustand der dritten Schalteinrichtung die Entladung der zweiten Energieversorgungseinheit verhindert wird.

Vorzugsweise ist die dritte Schalteinrichtung als Schütz oder als Transistor, insbesondere als Metall-Oxid-Halbleiter-Feldeffekttransistor (MOSFET), ausgebildet oder weist einen Schütz oder Transistor, insbesondere einen Metall-Oxid-Halbleiter-Feldeffekttransistor (MOSFET), auf. Alternativ ist vorzugsweise vorgesehen, dass die dritte Schalteinrichtung anders ausgebildet sind, wobei entscheidend ist, dass eine Funktion gemäß der erfindungsgemäßen Sicherungseinrichtung gewährleistet ist.

Durch die Entladung der zweiten Energieversorgungseinheit kann insbesondere bei einem Unfall oder einem drohenden Unfall des Kraftfahrzeugs die Sicherheit der Insassen und/oder Unfallbeteiligten gewährleistet werden.

Bei einer Weiterbildung der Erfindung ist vorgesehen, dass die Sicherungseinrichtung eine Recheneinrichtung aufweist, welche mit mindestens einer Sensoreinrichtung des Kraftfahrzeugs oder einer Leistungselektronik des Kraftfahrzeugs, mittels welcher insbesondere eine Leistung des Antriebs steuerbar und/oder regelbar ist, vorzugsweise mit mindestens einer solchen Sensoreinrichtung des Kraftfahrzeugs und einer solchen Leistungselektronik des Kraftfahrzeugs, kommunikationsverbunden ist. Die mindestens eine Sensoreinrichtung weist vorzugsweise eine Kamera und/oder einen Radar und/oder einen Beschleunigungssensor auf, oder besteht aus einer Kamera und/oder einem Radar und/oder einem Beschleunigungssensor. Es ist vorzugsweise vorgesehen, dass die mindestens eine Sensoreinrichtung weitere Sensoren aufweist und/oder aus weiteren Sensoren besteht. Durch Nutzung bereits vorhandener Einrichtungen des Kraftfahrzeugs, insbesondere einer Leistungselektronik und/oder mindestens einer Sensoreinrichtung der angesprochenen Art, können die Kosten für die Sicherungseinrichtung gesenkt werden.

Bei einer bevorzugten Ausführungsform der Sicherungseinrichtung ist vorgesehen, dass die Recheneinrichtung eingerichtet ist, um in Abhängigkeit von von der mindestens einen Sensoreinrichtung bereitgestellten Sensorinformationen oder von der Leistungselektronik bereitgestellten Leistungsinformationen, vorzugsweise von der mindestens einen Sensoreinrichtung bereitgestellten Sensorinformationen und von der Leistungselektronik bereitgestellten Leistungsinformationen, einen Betriebszustand des Kraftfahrzeugs zu ermitteln. Vorzugsweise ist die Recheneinrichtung dabei eingerichtet, um in Abhängigkeit des Betriebszustands die erste Schalteinrichtung und/oder die zweite Schalteinrichtung und/oder die dritte Schalteinrichtung jeweils zum Einnehmen des ersten Schaltzustands und/oder des zweiten Schaltzustands anzusteuern.

Vorzugsweise werden der Recheneinrichtung von der mindestens einen Sensoreinrichtung, insbesondere im Betrieb des Kraftfahrzeugs, kontinuierlich Sensorinformationen bereitgestellt. Vorzugsweise werden der Recheneinrichtung von der Leistungselektronik, insbesondere im Betrieb des Kraftfahrzeugs, kontinuierlich Leistungsinformationen bereitgestellt. Besonders bevorzugt sind die Leistungselektronik und die Recheneinrichtung miteinander kommunikationsverbunden, wobei der Leistungselektronik von der Recheneinrichtung Informationen zu dem Betriebszustand, insbesondere im Betrieb des Kraftfahrzeugs, kontinuierlich bereitgestellt werden. Die Leistungselektronik ist vorzugsweise eingerichtet, um die Leistung und/oder die Leistungsaufnahme des Antriebs in Abhängigkeit des Betriebszustands zu verändern, insbesondere zu reduzieren und/oder zu steigern.

Die Sensorinformationen umfassen insbesondere Informationen zu einer Gefährdungslage und/oder zu einer Unfallwahrscheinlichkeit für das Kraftfahrzeug. Die Leistungsinformationen umfassen insbesondere Informationen zu einer momentanen Leistungsaufnahme des Antriebs oder zu einer angeforderten Leistung des Antriebs. Insbesondere wird mittels der Recheneinrichtung der Betriebszustand des Kraftfahrzeugs ermittelt, wobei vorzugsweise die Kritikalität des Kraftfahrzeugs ermittelt wird. Vorzugsweise wird der Betriebszustand in Abhängigkeit der Kritikalität ermittelt. Insbesondere entsprechen voneinander verschiedene Betriebszustände des Kraftfahrzeugs voneinander verschiedenen Ausprägungen der Kritikalität. Vorzugsweise wird kontinuierlich, besonders bevorzugt in Echtzeit, der Betriebszustand des Kraftfahrzeugs ermittelt. Es ergibt sich dann insbesondere ein von der Zeit abhängiger Betriebszustand. Vorzugsweise nimmt der Betriebszustand diskrete Stufen ein. Vorzugsweise wird in Abhängigkeit von einer insbesondere zeitlichen Änderung der Sensorinformationen und/oder der Leistungsinformationen der Betriebszustand des Kraftfahrzeugs neu ermittelt. Das bedeutet insbesondere, dass in Abhängigkeit von einem zeitlichen Verlauf der Kritikalität des Kraftfahrzeugs, insbesondere bei einer veränderten Gefährdungslage und/oder Unfallwahrscheinlichkeit, vorzugsweise bei einer veränderten momentanen Leistungsaufnahme oder momentanen Leistung des Antriebs der Betriebszustand des Kraftfahrzeugs neu ermittelt wird.

Eine Weiterbildung der Erfindung sieht vor, dass in einem ersten Betriebszustand des Kraftfahrzeugs und in einem zweiten Betriebszustand des Kraftfahrzeugs die erste Schalteinrichtung in dem ersten Schaltzustand, die zweite Schalteinrichtung in dem ersten Schaltzustand und die dritte Schalteinrichtung in dem zweiten Schaltzustand vorliegen. Der zweite Betriebszustand des Kraftfahrzeugs ist dabei vorzugsweise verschieden von dem ersten Betriebszustand des Kraftfahrzeugs. Vorzugsweise ist die dem zweiten Betriebszustand des Kraftfahrzeugs zugeordnete Kritikalität höher als die dem ersten Betriebszustand des Kraftfahrzeugs zugeordnete Kritikalität.

Insbesondere entspricht der erste Betriebszustand einem Betriebszustand des Kraftfahrzeugs, wobei keine Gefährdung des Kraftfahrzeugs erkannt wird. Energie wird dabei vorzugsweise in vollem Umfang insbesondere durch die erste Energieversorgungseinheit dem Antrieb bereitgestellt. Der zweite Betriebszustand entspricht insbesondere einem Betriebszustand des Kraftfahrzeugs, wobei ein Gefährdungspotential bezüglich des Kraftfahrzeugs erkannt wird, insbesondere mittels der mindestens einen Sensoreinrichtung. Vorzugsweise wird in dem zweiten Betriebszustand insbesondere mittels der Leistungselektronik die Leistungsaufnahme des Antriebs gedrosselt.

Eine Weiterbildung der Erfindung sieht vor, dass in einem dritten Betriebszustand des Kraftfahrzeugs die erste Schalteinrichtung in dem zweiten Schaltzustand, die zweite Schalteinrichtung in dem ersten Schaltzustand und die dritte Schalteinrichtung in dem zweiten Schaltzustand vorliegt. Vorzugsweise ist eine dem dritten Betriebszustand zugeordnete Kritikalität des Kraftfahrzeugs höher als die dem zweiten Betriebszustand zugeordnete Kritikalität des Kraftfahrzeugs.

Der dritte Betriebszustand entspricht vorzugsweise einem Betriebszustand des Kraftfahrzeugs, wobei eine Unfallwahrscheinlichkeit sehr hoch ist, wobei sie insbesondere im Bereich von 70 % liegt. In dem dritten Betriebszustand ist die erste Energieversorgungseinheit von der wenigstens einen elektrischen Komponente, insbesondere dem Antrieb, getrennt, wobei über die zweite Energieversorgungseinheit weiterhin eine Energieversorgung der wenigstens einen elektrischen Komponente gewährleistet ist.

Eine Weiterbildung der Erfindung sieht vor, dass in einem vierten Betriebszustand des Kraftfahrzeugs und in einem fünften Betriebszustand des Kraftfahrzeugs die erste Schalteinrichtung in dem zweiten Schaltzustand, die zweite Schalteinrichtung in dem ersten Schaltzustand und die dritte Schalteinrichtung in dem ersten Schaltzustand vorliegen.

Dem vierten Betriebszustand ist vorzugsweise eine Kritikalität des Kraftfahrzeugs zugeordnet, welche höher ist als die Kritikalität in dem dritten Betriebszustand. Vorzugsweise ist dem fünften Betriebszustand eine Kritikalität des Kraftfahrzeugs zugeordnet, welche höher ist als die Kritikalität des Kraftfahrzeugs in dem vierten Betriebszustand.

Der vierte Betriebszustand entspricht insbesondere einem Betriebszustand des Kraftfahrzeugs, wobei ein Unfall unvermeidlich ist, wobei der Unfall, insbesondere ein Zusammenstoß des Kraftfahrzugs mit einem anderen Objekt, noch nicht stattgefunden hat. In dem vierten Betriebszustand wird insbesondere die zweite Energieversorgungseinheit entladen.

Der fünfte Betriebszustand entspricht vorzugsweise einem Betriebszustand des Kraftfahrzeugs, wobei der Unfall, insbesondere der Zusammenstoß, gerade beginnt. In dem fünften Betriebszustand wird vorzugsweise die Leistungselektronik über die entleerte zweite Energieversorgungseinheit entladen.

Gemäß einer Weiterbildung der Erfindung ist vorgesehen, dass in einem sechsten Betriebszustand des Kraftfahrzeugs die erste Schalteinrichtung in dem zweiten Schaltzustand, die zweite Schalteinrichtung in dem zweiten Schaltzustand und die dritte Schalteinrichtung in dem zweiten Schaltzustand vorliegt. Vorzugsweise ist dem sechsten Betriebszustand eine Kritikalität des Kraftfahrzeugs zugeordnet, welche höher ist als die dem fünften Betriebszustand zugeordnete Kritikalität des Kraftfahrzeugs.

Der sechste Betriebszustand entspricht vorzugsweise einem Betriebszustand des Kraftfahrzeugs, wobei der Unfall, insbesondere der Zusammenstoß, bereits begonnen hat und vorzugsweise noch voranschreitet. Vorzugsweise ist eine Deformation des Kraftfahrzeugs noch nicht abgeschlossen. In dem sechsten Betriebszustand wird die erste und/oder die zweite Energieversorgungseinheit von der wenigstens einen elektrischen Komponente, insbesondere dem Antrieb und/oder der Leistungselektronik getrennt.

Es ist vorzugsweise vorgesehen, dass insbesondere abhängig von einer Veränderung, insbesondere zeitlichen Veränderung, der Kritikalität, vorzugsweise der Sensorinformationen und/oder der Leistungsinformationen, ein Wechsel der Betriebszustände von einer Stufe auf eine nächste Stufe erfolgen kann. Die Stufen der Betriebszustände werden vorzugsweise der Reihe nach eingenommen, wobei beispielsweise nach dem ersten Betriebszustand der zweite Betriebszustand und danach der dritte Betriebszustand, usw., eingenommen wird. Zusätzlich ist es vorzugsweise vorgesehen, dass in Abhängigkeit von einer Veränderung, insbesondere zeitlichen Veränderung, der Kritikalität einzelne Stufen quasi übersprungen werden, beispielsweise ein Wechsel von dem ersten Betriebszustand direkt in den dritten Betriebszustand erfolgt.

In analoger Weise ist es vorzugsweise vorgesehen, dass sich bei einer abnehmenden Kritikalität der Betriebszustand in Richtung quasi niedrigerer Stufen entwickelt, welche einer niedrigeren Kritikalität des Kraftfahrzeugs entsprechen. Beispielsweise kann ein Wechsel von dem dritten Betriebszustand in den zweiten Betriebszustand und schließlich in den ersten Betriebszustand erfolgen. Insbesondere bei eine besonders schnellen Änderung der Kritikalität können einzelne Stufen des Betriebszustands auch übersprungen werden, wobei beispielsweise ein Wechsel von dem dritten Betriebszustand direkt in den ersten Betriebszustand stattfindet.

Die Aufgabe wird insbesondere auch gelöst, indem ein Kraftfahrzeug mit einer ersten Energieversorgungseinheit, einer zweiten Energieversorgungseinheit, welche zu der ersten Energieversorgungseinheit parallel verschaltet und als Kondensator ausgebildet ist, wenigstens einer elektrischen Komponente, insbesondere einem elektrischen Antrieb, und vorzugsweise mindestens einer Sensoreinrichtung und/oder einer Leistungselektronik geschaffen wird, welches eine Sicherungseinrichtung aufweist. Besonders bevorzugt weist das Kraftfahrzeug eine erfindungsgemäße Sicherungseinrichtung nach einem der zuvor beschriebenen Ausführungsformen auf. In Zusammenhang mit dem Kraftfahrzeug ergeben sich insbesondere die Vorteile, die bereits in Zusammenhang mit der Sicherungseinrichtung erläutert wurden.

Die Aufgabe wird insbesondere auch gelöst, indem ein Verfahren zum Betreiben einer Sicherungseinrichtung geschaffen wird, wobei die Sicherungseinrichtung eine erste Schalteinrichtung aufweist, wobei eine elektrische Verbindung einer ersten Energieversorgungseinheit eines Kraftfahrzeugs mit wenigstens einer elektrischen Komponente des Kraftfahrzeugs, insbesondere einem elektrischen Antrieb des Kraftfahrzeugs, in einem ersten Schaltzustand der ersten Schalteinrichtung hergestellt und in einem zweiten Schaltzustand der ersten Schalteinrichtung unterbrochen wird. Es ist vorgesehen, dass die Sicherungseinrichtung eine zweite Schalteinrichtung aufweist, wobei eine elektrische Verbindung einer zweiten Energieversorgungseinheit des Kraftfahrzeugs, welche zu der ersten Energieversorgungseinheit parallel verschaltet und als Kondensator ausgebildet ist, mit der wenigstens einen elektrischen Komponente in einem ersten Schaltzustand der zweiten Schalteinrichtung hergestellt und in einem zweiten Schaltzustand der zweiten Schalteinrichtung unterbrochen wird. Besonders bevorzugt wird im Rahmen des Verfahrens eine erfindungsgemäße Sicherungseinrichtung nach einem der zuvor beschriebenen Ausführungsformen betrieben. Im Rahmen des Verfahrens ergeben sich insbesondere die Vorteile, die bereits in Zusammenhang mit der erfindungsgemäßen Sicherungseinrichtung erläutert wurden.

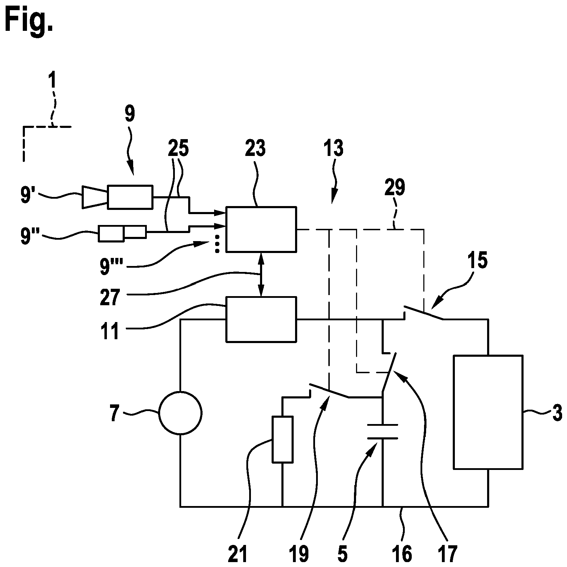

Die Erfindung wird im Folgenden anhand der Zeichnung näher erläutert. Dabei zeigt die einzige
- Figur: eine schematische Darstellung eines Kraftfahrzeugs mit einer Sicherungseinrichtung.

Die einzige Figur zeigt schematisch ein Kraftfahrzeug 1 mit einer ersten Energieversorgungseinheit 3 und einer zweiten Energieversorgungseinheit 5. Die erste Energieversorgungseinheit 3 ist vorzugsweise als Akkumulator ausgebildet. Die zweite Energieversorgungseinheit 5 ist zu der ersten Energieversorgungseinheit 3 parallel verschaltet und als Kondensator ausgebildet. Besonders bevorzugt ist die zweite Energieversorgungseinheit 5 als Superkondensator ausgebildet. Das Kraftfahrzeug 1 weist weiterhin wenigstens eine elektrische Komponente, insbesondere einen elektrischen Antrieb 7, auf. Der Antrieb 7 ist bevorzugt als Elektromotor ausgebildet.

Bei dem Ausführungsbeispiel gemäß der Figur weist das Kraftfahrzeug 1 mindestens eine - hier zwei - Sensoreinrichtungen 9 auf, wobei hier exemplarisch eine als Kamera ausgebildete Sensoreinrichtung 9' und eine als Beschleunigungssensor ausgebildete Sensoreinrichtung 9" vorgesehen sind. Optional können weitere Sensoreinrichtungen vorgesehen sein, was durch mit dem Bezugszeichen 9'" versehene Punkte in der Figur dargestellt ist.

Darüber hinaus weist das Kraftfahrzeug 1 eine weitere elektrische Komponente, nämlich eine Leistungselektronik 11, auf, mittels welcher insbesondere eine Leistung des Antriebs 7 steuerbar und/oder regelbar ist.

Das Kraftfahrzeug 1 weist eine Sicherungseinrichtung 13 zum reversiblen Abschalten der wenigstens einen elektrischen Komponente des Kraftfahrzeugs 1, insbesondere des Antriebs 7 und der Leistungselektronik 11, auf. Die Sicherungseinrichtung 13 weist eine erste Schalteinrichtung 15 auf, wobei eine elektrische Verbindung der ersten Energieversorgungseinheit 3 des Kraftfahrzeugs 1 mit der wenigstens einen elektrischen Komponente des Kraftfahrzeugs 1, insbesondere dem elektrischen Antrieb 7 und der Leistungselektronik 11, in einem ersten Schaltzustand der ersten Schalteinrichtung 15 vorliegt und in einem zweiten Schaltzustand der ersten Schalteinrichtung 15 unterbrochen ist. Die elektrische Verbindung ist schematisch mittels einer durch das Bezugszeichen 16 gekennzeichneten elektrischen Leitung dargestellt.

Es ist vorgesehen, dass die Sicherungseinrichtung 13 eine zweite Schalteinrichtung 17 aufweist, wobei eine elektrische Verbindung der zweiten Energieversorgungseinheit 5 des Kraftfahrzeugs 1 mit der wenigstens einen elektrischen Komponente in einem ersten Schaltzustand der zweiten Schalteinrichtung 17 vorliegt und in einem zweiten Schaltzustand der zweiten Schalteinrichtung 17 unterbrochen ist.

Die Sicherungseinrichtung 13 weist hier eine dritte Schalteinrichtung 19 auf, wobei durch einen ersten Schaltzustand der dritten Schalteinrichtung 19 eine Entladung der zweiten Energieversorgungseinheit 5 bewirkt wird und durch einen zweiten Schaltzustand der dritten Schalteinrichtung 19 die Entladung der zweiten Energieversorgungseinheit 5 verhindert wird. Bei dem in der Figur dargestellten Ausführungsbeispiel ist in einem elektrischen Umgehungspfad, welcher in dem ersten Schaltzustand der dritten Schalteinrichtung 19 die zweite Energieversorgungseinheit 5 kurzschließt, ein Widerstand 21 vorgesehen.

Die erste Schalteinrichtung 15 ist hier als Schalter ausgebildet, welcher in dem ersten Schaltzustand der ersten Schalteinrichtung 15 geschlossen und in dem zweiten Schaltzustand der ersten Schalteinrichtung 15 geöffnet ist. Die zweite Schalteinrichtung 17 ist hier als Schalter ausgebildet, welcher in dem ersten Schaltzustand der zweiten Schalteinrichtung 17 geschlossen und in dem zweiten Schaltzustand der zweiten Schalteinrichtung 17 geöffnet ist. Die dritte Schalteinrichtung 19 ist hier als Schalter ausgebildet, welcher in dem ersten Schaltzustand der dritten Schalteinrichtung 19 geschlossen und in dem zweiten Schaltzustand der dritten Schalteinrichtung 19 geöffnet ist.

Die Sicherungseinrichtung 13 weist hier eine Recheneinrichtung 23 auf, welche mit der mindestens einen Sensoreinrichtung 9 des Kraftfahrzeugs 1 kommunikationsverbunden ist. Eine Kommunikationsverbindung zwischen der mindestens einen Sensoreinrichtung 9 und der Recheneinrichtung 23 ist hier durch Pfeile 25 schematisch dargestellt. Weiterhin ist die Recheneinrichtung 23 hier mit der Leistungselektronik 11 des Kraftfahrzeugs 1, mittels welcher insbesondere die Leistung des Antriebs 7 steuerbar und/oder regelbar ist, kommunikationsverbunden. Die Kommunikationsverbindung zwischen der Recheneinrichtung 23 und der Leistungselektronik 11 ist hier schematisch durch einen Doppelpfeil 27 dargestellt.

Die Recheneinrichtung 23 ist vorzugsweise eingerichtet, um in Abhängigkeit von von der mindestens einen Sensoreinrichtung 9 bereitgestellten Sensorinformationen und/oder von der Leistungselektronik 11 bereitgestellten Leistungsinformationen einen Betriebszustand des Kraftfahrzeugs 1 zu ermitteln. Vorzugsweise ist die Recheneinrichtung 23 eingerichtet, um in Abhängigkeit des Betriebszustands die erste Schalteinrichtung 15 und/oder die zweite Schalteinrichtung 17 und/oder die dritte Schalteinrichtung 19 jeweils zum Einnehmen des ersten Schaltzustands und/oder des zweiten Schaltzustands anzusteuern. Eine Ansteuerung der ersten Schalteinrichtung 15 und/oder der zweiten Schalteinrichtung 17 und/oder der dritten Schalteinrichtung 19 ist in der Figur mittels einer gestrichelten Linie 29 schematisch dargestellt.

Es ist also vorzugsweise vorgesehen, dass die mindestens eine Sensoreinrichtung 9 der Recheneinrichtung 23 Sensorinformationen, insbesondere Informationen zu einer Gefährdungslage und/oder einer Unfallwahrscheinlichkeit des Kraftfahrzeugs 1, bereitstellt. Weiterhin ist es vorzugsweise vorgesehen, dass die Leistungselektronik 11 der Recheneinrichtung 23 Leistungsinformationen, insbesondere Informationen zu einer momentanen Leistungsaufnahme des Antriebs 7 und/oder einer angeforderten und/oder momentanen Leistung des Antriebs 7, bereitstellt.

Weiterhin ist es vorzugsweise vorgesehen, dass die Recheneinrichtung 23 der Leistungselektronik 11 Informationen zu dem Betriebszustand des Kraftfahrzeugs 1 bereitstellt. In Abhängigkeit von den Informationen zu dem Betriebszustand des Kraftfahrzeugs 1 ist vorzugsweise die Leistung des Antriebs 7 mittels der Leistungselektronik 11 veränderbar, vorzugsweise verringerbar.

Vorzugsweise nimmt das Kraftfahrzeug 1 verschiedene, insbesondere diskrete Stufen der Betriebszustände ein, welchen jeweils insbesondere eine bestimmte Kritikalität des Kraftfahrzeugs 1 zugeordnet ist. Bei einem besonders bevorzugten Ausführungsbeispiel, welches im Folgenden näher ausgeführt wird, sind sechs Stufen der Betriebszustände des Kraftfahrzeugs 1 vorgesehen. Einem ersten Betriebszustand des Kraftfahrzeugs 1 ist dabei insbesondere die niedrigste Kritikalität des Kraftfahrzeugs 1 zugeordnet, wobei einem sechsten Betriebszustand die höchste Kritikalität des Kraftfahrzeugs 1 zugeordnet ist. Zwischen dem ersten und dem sechsten Betriebszustand sind der zweite Betriebszustand, der dritte Betriebszustand, der vierte Betriebszustand und der fünfte Betriebszustand mit jeweils zunehmender zugeordneter Kritikalität vorgesehen.

Es ist dabei vorzugsweise vorgesehen, dass in Abhängigkeit von den Sensorinformationen, welche insbesondere eine Gefährdungslage und/oder Unfallwahrscheinlichkeit des Kraftfahrzeugs 1 beschreiben, und/oder der Leistungsinformationen, insbesondere einer momentanen Leistungsaufnahme und/oder angeforderten Leistung des Antriebs 7, der Betriebszustand ermittelt wird. Insbesondere erfolgt diese Ermittlung kontinuierlich, vorzugsweise in Echtzeit. Es wird also vorzugsweise im zeitlichen Verlauf kontinuierlich, insbesondere im Betrieb des Kraftfahrzeugs 1, einer der sechs Betriebszustände ermittelt.

Im Folgenden werden die vorzugsweise vorgesehenen sechs Betriebszustände näher erläutert.

Vorzugsweise liegen in dem ersten Betriebszustand des Kraftfahrzeugs 1 und in dem zweiten Betriebszustand des Kraftfahrzeugs 1 die erste Schalteinrichtung 15 in dem ersten Schaltzustand, die zweite Schalteinrichtung 17 in dem ersten Schaltzustand und die dritte Schalteinrichtung 19 in dem zweiten Schaltzustand vor. Der erste Betriebszustand entspricht vorzugsweise einem Betriebszustand des Kraftfahrzeugs 1, wobei keine Gefährdung vorliegt.

In dem ersten Betriebszustand wird dem Antrieb 7 vorzugsweise eine maximale Energie insbesondere durch die erste Energieversorgungseinheit 3 bereitgestellt. Der zweite Betriebszustand, in welchem die erste Schalteinrichtung 15, die zweite Schalteinrichtung 17 und die dritte Schalteinrichtung 19 gegenüber dem ersten Betriebszustand hinsichtlich ihres Schaltzustands unverändert sind, entspricht einem Betriebszustand des Kraftfahrzeugs 1, wobei insbesondere ein Gefährdungspotential erkannt ist. Eine solche Erkennung wird insbesondere mittels der mindestens einen Sensoreinrichtung 9 realisiert. In dem zweiten Betriebszustand wird die Energiezufuhr insbesondere der ersten Energieversorgungseinheit 3 zu dem Antrieb 7 vorzugsweise mittels der Leistungselektronik 11 reduziert.

Vorzugsweise liegt in dem dritten Betriebszustand des Kraftfahrzeugs 1 die erste Schalteinrichtung 15 in dem zweiten Schaltzustand, die zweite Schalteinrichtung 17 in dem ersten Schaltzustand und die dritte Schalteinrichtung 19 in dem zweiten Schaltzustand vor. Der dritte Betriebszustand entspricht vorzugsweise einem Betriebszustand des Kraftfahrzeugs 1, wobei eine Unfallwahrscheinlichkeit sehr hoch ist, insbesondere im Bereich von 70 %. In dem dritten Betriebszustand wird die erste Energieversorgungseinheit 3 von der wenigstens einen elektrischen Komponente, insbesondere dem Antrieb 7 und der Leistungselektronik 11 getrennt. Mittels der zweiten Energieversorgungseinheit 5 ist jedoch weiterhin eine Energieversorgung der elektrischen Komponenten, insbesondere des Antriebs 7 gewährleistet.

Vorzugsweise liegen in dem vierten Betriebszustand des Kraftfahrzeugs 1 und in dem fünften Betriebszustand des Kraftfahrzeugs 1 die erste Schalteinrichtung 15 in dem zweiten Schaltzustand, die zweite Schalteinrichtung 17 in dem ersten Schaltzustand und die dritte Schalteinrichtung 19 in dem ersten Schaltzustand vor. Der vierte Betriebszustand entspricht insbesondere einem Betriebszustand des Kraftfahrzeugs 1, wobei ein Unfall, insbesondere ein Zusammenstoß unvermeidlich ist. Ein solcher Unfall steht in dem vierten Betriebszustand vorzugsweise unmittelbar bevor. In dem vierten Betriebszustand wird insbesondere die zweite Energieversorgungseinheit 5 entladen.

Der fünfte Betriebszustand entspricht insbesondere einem Betriebszustand des Kraftfahrzeugs 1, wobei der Unfall gerade beginnt. In dem fünften Betriebszustand wird insbesondere die Leistungselektronik 11 über die entleerte zweite Energieversorgungseinheit 5, also dem Kondensator, vorzugsweise den Superkondensator, entladen.

Vorzugsweise liegt in dem sechsten Betriebszustand des Kraftfahrzeugs 1 die erste Schalteinrichtung 15 in dem zweiten Schaltzustand, die zweite Schalteinrichtung 17 in dem zweiten Schaltzustand und die dritte Schalteinrichtung 19 in dem zweiten Schaltzustand vor. Vorzugsweise entspricht der sechste Betriebszustand einem Betriebszustand des Kraftfahrzeugs 1, wobei der Unfall, insbesondere Zusammenstoß, voranschreitet. Der Unfall hat also bereits stattgefunden, wobei insbesondere eine Schädigung, insbesondere Zerstörung und/oder Deformation, des Kraftfahrzeugs 1 noch nicht abgeschlossen ist. In dem sechsten Betriebszustand wird auch die zweite Energieversorgungseinheit 5 von der wenigstens einen elektrischen Komponente, insbesondere dem Antrieb 7 und der Leistungselektronik 11 getrennt. Ein Bordnetz des Kraftfahrzeugs 1 wird in dem sechsten Betriebszustand vorzugsweise quasi deaktiviert.

Im Folgenden wird ein Verfahren beschrieben, mittels welchem die Sicherungseinrichtung 13 gemäß des in der Figur dargestellten Ausführungsbeispiels betrieben wird. Die Sicherungseinrichtung 13 weist dabei die erste Schalteinrichtung 15 auf, wobei die elektrische Verbindung der ersten Energieversorgungseinheit 3 des Kraftfahrzeugs 1 mit der wenigstens einen elektrischen Komponente des Kraftfahrzeugs 1, insbesondere dem elektrischen Antrieb 7 des Kraftfahrzeugs 1 und vorzugsweise der Leistungselektronik 11 des Kraftfahrzeugs 1, in dem ersten Schaltzustand der ersten Schalteinrichtung 15 hergestellt und in dem zweiten Schaltzustand der ersten Schalteinrichtung 15 unterbrochen wird.

Es ist vorgesehen, dass die Sicherungseinrichtung 13 die zweite Schalteinrichtung 17 aufweist, wobei die elektrische Verbindung der zweiten Energieversorgungseinheit 5 des Kraftfahrzeugs 1, welche zu der ersten Energieversorgungseinheit 3 parallel verschaltet und als Kondensator, insbesondere als Superkondensator, ausgebildet ist, mit der wenigstens einen elektrischen Komponente in dem ersten Schaltzustand der zweiten Schalteinrichtung 17 hergestellt und in dem zweiten Schaltzustand der zweiten Schalteinrichtung 17 unterbrochen wird.

Insgesamt zeigt sich, dass mittels der Sicherungseinrichtung 13, dem Kraftfahrzeug 1 mit der Sicherungseinrichtung 13 sowie dem Verfahren zum Betreiben der Sicherungseinrichtung 13 ein reversibles Abschalten der wenigstens einen elektrischen Komponente in dem Kraftfahrzeug realisiert wird. Auf diese Weise wird ein Schutz von Insassen des Kraftfahrzeugs 1 sichergestellt, wobei gleichzeitig eine Beeinträchtigung des Betriebs des Kraftfahrzeugs 1 sowie ein Verschleiß der Schalteinrichtungen 15, 17, 19 reduziert werden.

## Patentansprüche

1. Sicherungseinrichtung (13) zum reversiblen Abschalten wenigstens einer elektrischen Komponente eines Kraftfahrzeugs (1), mit einer ersten Schalteinrichtung (15), wobei eine elektrische Verbindung einer ersten Energieversorgungseinheit (3) des Kraftfahrzeugs (1) mit der wenigstens einen elektrischen Komponente, die als elektrischer Antrieb (7) des Kraftfahrzeugs (1) ausgebildet ist, in einem ersten Schaltzustand der ersten Schalteinrichtung (15) vorliegt und in einem zweiten Schaltzustand der ersten Schalteinrichtung (15) unterbrochen ist, mit einer zweiten Schalteinrichtung (17), wobei eine elektrische Verbindung einer zweiten Energieversorgungseinheit (5) des Kraftfahrzeugs (1), welche über die erste Schalteinrichtung (15) und die zweite Schalteinrichtung (17) zu der ersten Energieversorgungseinheit (3) parallel verschaltet und als Kondensator ausgebildet ist, mit der wenigstens einen elektrischen Komponente in einem ersten Schaltzustand der zweiten Schalteinrichtung (17) vorliegt und in einem zweiten Schaltzustand der zweiten Schalteinrichtung (17) unterbrochen ist, mit einer dritten Schalteinrichtung (19), wobei durch einen ersten Schaltzustand der dritten Schalteinrichtung (19) eine Entladung der zweiten Energieversorgungseinheit (5) bewirkt wird und durch einen zweiten Schaltzustand der dritten Schalteinrichtung (19) die Entladung der zweiten Energieversorgungseinheit (5) verhindert wird und mit einer Recheneinrichtung (23), welche mit mindestens einer Sensoreinrichtung (9,9',9",9"') des Kraftfahrzeugs (1) und mit einer Leistungselektronik (11) des Kraftfahrzeugs (1), mittels welcher eine Leistung des Antriebs (7) steuerbar und/oder regelbar ist, kommunikationsverbunden ist, wobei die Recheneinrichtung (23) eingerichtet ist, um in Abhängigkeit von von der mindestens einen Sensoreinrichtung (9) bereitgestellten Sensorinformationen und von der Leistungselektronik (11) bereitgestellten Leistungsinformationen einen Betriebszustand des Kraftfahrzeugs (1) zu ermitteln, und um in Abhängigkeit des Betriebszustands die erste Schalteinrichtung (15) und/oder die zweite Schalteinrichtung (17) und/oder die dritte Schalteinrichtung (19) jeweils zum Einnehmen des ersten Schaltzustands und/oder des zweiten Schaltzustands anzusteuern, und wobei in einem ersten Betriebszustand des Kraftfahrzeugs (1) und in einem zweiten Betriebszustand des Kraftfahrzeugs (1) die erste Schalteinrichtung (15) in dem ersten Schaltzustand, die zweite Schalteinrichtung (17) in dem ersten Schaltzustand und die dritte Schalteinrichtung (19) in dem zweiten Schaltzustand vorliegen, wobei in dem ersten Betriebszustand dem Antrieb (7) eine maximale Energie durch die erste Energieversorgungseinheit (3) bereitgestellt wird, **dadurch gekennzeichnet, dass** in dem zweiten Betriebszustand ein aus den Sensorinformationen ermitteltes Gefährdungspotential erkannt ist und die Leistung des Antriebs (7) gedrosselt wird und in einem dritten Betriebszustand des Kraftfahrzeugs (1) eine aus den Sensorinformationen ermittelte Unfallwahrscheinlichkeit sehr hoch ist und die erste Schalteinrichtung (15) in dem zweiten Schaltzustand, die zweite Schalteinrichtung (17) in dem ersten Schaltzustand und die dritte Schalteinrichtung (19) in dem zweiten Schaltzustand vorliegt, sodass in dem dritten Betriebszustand über die zweite Energieversorgungseinheit (5) weiterhin eine Energieversorgung des Antriebs (7) gewährleistet wird.

2. Sicherungseinrichtung (13) nach Anspruch 1, **dadurch gekennzeichnet, dass** in einem vierten Betriebszustand des Kraftfahrzeugs (1) und in einem fünften Betriebszustand des Kraftfahrzeugs (1) die erste Schalteinrichtung (15) in dem zweiten Schaltzustand, die zweite Schalteinrichtung (17) in dem ersten Schaltzustand und die dritte Schalteinrichtung (19) in dem ersten Schaltzustand vorliegen.

3. Sicherungseinrichtung (13) nach einem der vorhergehenden Ansprüche, **dadurch gekennzeichnet, dass** in einem sechsten Betriebszustand des Kraftfahrzeugs (1) die erste Schalteinrichtung (15) in dem zweiten Schaltzustand, die zweite Schalteinrichtung (17) in dem zweiten Schaltzustand und die dritte Schalteinrichtung (19) in dem zweiten Schaltzustand vorliegt.

4. Kraftfahrzeug (1) mit einer ersten Energieversorgungseinheit (3), einer zweiten Energieversorgungseinheit (5), welche zu der ersten Energieversorgungseinheit (3) parallel verschaltet und als Kondensator ausgebildet ist, wenigstens einer elektrischen Komponente, insbesondere einem elektrischen Antrieb (7), und vorzugsweise mindestens einer Sensoreinrichtung (9,9',9",9"') und/oder einer Leistungselektronik (11), **gekennzeichnet durch** eine Sicherungseinrichtung (13) nach einem der Ansprüche 1 bis 8.

5. Verfahren zum Betreiben einer Sicherungseinrichtung (13), insbesondere einer Sicherungseinrichtung (13) nach einem der Ansprüche 1 bis 8, wobei die Sicherungseinrichtung (13) eine erste Schalteinrichtung (15) aufweist, wobei eine elektrische Verbindung einer ersten Energieversorgungseinheit (3) eines Kraftfahrzeugs (1) mit wenigstens einer elektrischen Komponente des Kraftfahrzeugs (1), welche als elektrischer Antrieb (7) des Kraftfahrzeugs (1) ausgebildet ist, in einem ersten Schaltzustand der ersten Schalteinrichtung (15) hergestellt und in einem zweiten Schaltzustand der ersten Schalteinrichtung (15) unterbrochen wird, mit einer zweiten Schalteinrichtung (17) aufweist, wobei eine elektrische Verbindung einer zweiten Energieversorgungseinheit (5) des Kraftfahrzeugs (1), welche über die erste Schalteinrichtung (15) und die zweite Schalteinrichtung (17) zu der ersten Energieversorgungseinheit (3) parallel verschaltet und als Kondensator ausgebildet ist, mit der wenigstens einen elektrischen Komponente in einem ersten Schaltzustand der zweiten Schalteinrichtung (17) hergestellt und in einem zweiten Schaltzustand der zweiten Schalteinrichtung (17) unterbrochen wird, mit einer dritten Schalteinrichtung (19), wobei durch einen ersten Schaltzustand der dritten Schalteinrichtung (19) eine Entladung der zweiten Energieversorgungseinheit (5) bewirkt wird und durch einen zweiten Schaltzustand der dritten Schalteinrichtung (19) die Entladung der zweiten Energieversorgungseinheit (5) verhindert wird und mit einer Recheneinrichtung (23), welche mit mindestens einer Sensoreinrichtung (9,9',9",9"') des Kraftfahrzeugs (1) und mit einer Leistungselektronik (11) des Kraftfahrzeugs (1), mittels welcher eine Leistung des Antriebs (7) steuerbar und/oder regelbar ist, kommunikationsverbunden ist, wobei die Recheneinrichtung (23) eingerichtet ist, um in Abhängigkeit von Sensorinformationen, die von der mindestens einen Sensoreinrichtung (9) bereitgestellt werden, und von der Leistungselektronik (11) bereitgestellten Leistungsinformationen einen Betriebszustand des Kraftfahrzeugs (1) zu ermitteln, und um in Abhängigkeit des Betriebszustands die erste Schalteinrichtung (15) und/oder die zweite Schalteinrichtung (17) und/oder die dritte Schalteinrichtung (19) jeweils zum Einnehmen des ersten Schaltzustands und/oder des zweiten Schaltzustands anzusteuern, und wobei in einem ersten Betriebszustand des Kraftfahrzeugs (1) und in einem zweiten Betriebszustand des Kraftfahrzeugs (1) die erste Schalteinrichtung (15) in dem ersten Schaltzustand, die zweite Schalteinrichtung (17) in dem ersten Schaltzustand und die dritte Schalteinrichtung (19) in dem zweiten Schaltzustand vorliegen, wobei in dem ersten Betriebszustand dem Antrieb (7) eine maximale Energie durch die erste Energieversorgungseinheit (3) bereitgestellt wird, **dadurch gekennzeichnet, dass** in dem zweiten Betriebszustand ein aus den Sensorinformationen ermitteltes Gefährdungspotential erkannt ist und die Leistung des Antriebs (7) gedrosselt wird und in einem dritten Betriebszustand des Kraftfahrzeugs (1) eine aus den Sensorinformationen ermittelte Unfallwahrscheinlichkeit sehr hoch ist und die erste Schalteinrichtung (15) in dem zweiten Schaltzustand, die zweite Schalteinrichtung (17) in dem ersten Schaltzustand und die dritte Schalteinrichtung (19) in dem zweiten Schaltzustand vorliegt, sodass in dem dritten Betriebszustand über die zweite Energieversorgungseinheit (5) weiterhin eine Energieversorgung des Antriebs (7) gewährleistet wird.

## Claims

1. Safety device (13) for reversible switching off at least one electrical component of a motor vehicle (1), with a first switching device (15), wherein an electrical connection of a first energy supply unit (3) of the motor vehicle (1) to the at least one electrical component, which is designed as an electric drive (7) of the motor vehicle (1), is present in a first switching state of the first switching device (15) and is interrupted in a second switching state of the first switching device (15), with a second switching device (17), wherein an electrical connection of a second energy supply unit (5) of the motor vehicle (1), which is connected in parallel to the first energy supply unit (3) via the first switching device (15) and the second switching device (17) and is designed as a capacitor, to the at least one electrical component is present in a first switching state of the second switching device (17) and is interrupted in a second switching state of the second switching device (17), with a third switching device (19), wherein a first switching state of the third switching device (19) causes a discharge of the second energy supply unit (5) and a second switching state of the third switching device (19) prevents the discharge of the second energy supply unit (5), and with a computing device (23), which is communicationally connected to at least one sensor device (9, 9', 9", 9"') of the motor vehicle (1) and to a power electronics (11) of the motor vehicle (1), by means of which a power of the drive (7) can be controlled or regulated, wherein the computing device (23) is configured to determine the operating state of the motor vehicle (1) as a function of sensor information provided by the at least one sensor device (9) and power information provided by the power electronics (11), and to actuate the first switching device (15) and/or the second switching device (17) and/or the third switching device (19) to respectively assume the first switching state and/or of the second switching state depending on the operating state, and wherein in a first operating state of the motor vehicle (1) and in a second operating state of the motor vehicle (1), the first switching device (15) is in the first switching state, the second switching device (17) is in the first switching state and the third switching device (19) is in the second switching state, wherein in the first operating state the drive (7) is provided with a maximum energy by the first energy supply unit (3), **characterised in that**, in the second operating state a hazard potential determined from the sensor information is recognised and the power of the drive (7) is curbed and in a third operating state of the motor vehicle (1) an accident probability determined from the sensor information is very high and the first switching device (15) is in the second switching state, the second switching device (17) is in the first switching state and the third switching device (19) is in the second switching state, so that in the third operating state an energy supply for the drive (7) continues to be guaranteed by the second energy supply unit (5).

2. Safety device (13) according to claim 1, **characterised in that**, in a fourth operating state of the motor vehicle (1) and in a fifth operating state of the motor vehicle (1), the first switching device (15) is in the second switching state, the second switching device (17) is in the first switching state and the third switching device (19) is in the first switching state.

3. Safety device (13) according to any of the preceding claims, **characterised in that**, in a sixth operating state of the motor vehicle (1), the first switching device (15) is in the second switching state, the second switching device (17) is in the second switching state and the third switching device (19) is in the second switching state.

4. Motor vehicle (1) with a first energy supply unit (3), a second energy supply unit (5), which is connected in parallel to the first energy supply unit (3) and is designed as a capacitor, at least one electrical component, in particular an electrical drive (7), and preferably at least one sensor device (9, 9', 9", 9"') and/or a power electronics (11), **characterised by** a safety device (13) according to one of claims 1 to 8.

5. Method for operating a safety device (13), in particular a safety device (13) according to any one of claims 1 to 8, wherein the safety device (13) has a first switching device (15), wherein an electrical connection of a first energy supply unit (3) of a motor vehicle (1) to at least one electrical component of the motor vehicle (1), which is designed as an electric drive (7) of the motor vehicle (1), is produced in a first switching state of the first switching device (15) and is interrupted in a second switching state of the first switching device (15), with a second switching device (17), wherein an electrical connection of a second energy supply unit (5) of the motor vehicle (1), which is connected in parallel to the first energy supply unit (3) via the first switching device (15) and the second switching device (17) and is designed as a capacitor, to the at least one electrical component is produced in a first switching state of the second switching device (17) and is interrupted in a second switching state of the second switching device (17), with a third switching device (19), wherein a first switching state of the third switching device (19) causes a discharge of the second energy supply unit (5) and a second switching state of the third switching device (19) prevents the discharge of the second energy supply unit (5) and with a computing device (23), which is communicationally connected to at least one sensor device (9, 9', 9", 9"') of the motor vehicle (1) and to a power electronics (11) of the motor vehicle (1), by means of which a power of the drive (7) can be controlled or regulated, wherein the computing device (23) is configured to determine the operating state of the motor vehicle (1) as a function of sensor information provided by the at least one sensor device (9) and power information provided by the power electronics (11), and to actuate the first switching device (15) and/or the second switching device (17) and/or the third switching device (19) to respectively assume the first switching state and/or of the second switching state depending on the operating state, and wherein in a first operating state of the motor vehicle (1) and in a second operating state of the motor vehicle (1), the first switching device (15) is in the first switching state, the second switching device (17) is in the first switching state and the third switching device (19) is in the second switching state, wherein in the first operating state the drive (7) is provided with a maximum energy by the first energy supply unit (3), **characterised in that**, in the second operating state a hazard potential determined from the sensor information is recognised and the power of the drive (7) is curbed and in a third operating state of the motor vehicle (1) an accident probability determined from the sensor information is very high and the first switching device (15) is in the second switching state, the second switching device (17) is in the first switching state and the third switching device (19) is in the second switching state, so that in the third operating state an energy supply for the drive (7) continues to be guaranteed by the second energy supply unit (5).

## Revendications

1. Dispositif de protection (13) pour la coupure réversible d'au moins un composant électrique d'un véhicule automobile (1) avec un premier dispositif de commutation (15), dans lequel une connexion électrique entre une première unité d'alimentation électrique (3) du véhicule automobile (1) et l'au moins un composant électrique, qui est conçu comme un entraînement électrique (7) du véhicule automobile (1), est présente dans un premier état de commutation du premier dispositif de commutation (15) et est interrompue dans un deuxième état de commutation du premier dispositif de commutation (15), avec un deuxième dispositif de commutation (17), dans lequel une connexion électrique entre une deuxième unité d'alimentation électrique (5) du véhicule automobile (1), qui est montée en parallèle avec la première unité d'alimentation électrique (3) par l'intermédiaire du premier dispositif de commutation (15) et du deuxième dispositif de commutation (17) et qui est conçue comme un condensateur, et l'au moins un composant électrique est présente dans un premier état de commutation du deuxième dispositif de commutation (17) et est interrompue dans un deuxième état de commutation du deuxième dispositif de commutation (17), avec un troisième dispositif de commutation (19), dans lequel une décharge de la deuxième unité d'alimentation électrique (5) est effectuée par un premier état de commutation du troisième dispositif de commutation (19) et la décharge de la deuxième unité d'alimentation électrique (5) est empêchée par un deuxième état de commutation du troisième dispositif de commutation (19), et avec un dispositif informatique (23), qui est connecté en communication avec au moins un dispositif de capteur (9, 9', 9", 9"') du véhicule automobile (1) et avec l'électronique de puissance (11) du véhicule automobile (1), au moyen duquel la puissance de l'entraînement (7) peut être commandée et/ou régulée, dans lequel le dispositif informatique (23) est conçu pour déterminer un état de fonctionnement du véhicule automobile (1) en fonction d'informations de capteur fournies par l'au moins un dispositif de capteur (9) et d'informations de puissance fournies par l'électronique de puissance (11), et pour activer le premier dispositif de commutation (15) et/ou le deuxième dispositif de commutation (17) et/ou le troisième dispositif de commutation (19) en fonction de l'état de fonctionnement pour qu'ils prennent chacun le premier état de commutation et/ou le deuxième état de commutation, et dans lequel, dans un premier état de fonctionnement du véhicule automobile (1) et dans un deuxième état de fonctionnement du véhicule automobile (1), le premier dispositif de commutation (15) se trouve dans le premier état de commutation, le deuxième dispositif de commutation (17) se trouve dans le premier état de commutation et le troisième dispositif de commutation (19) se trouve dans le deuxième état de commutation, dans lequel, dans le premier état de fonctionnement, une énergie maximale est fournie à l'entraînement (7) par la première unité d'alimentation électrique (3), **caractérisé en ce que,** dans le deuxième état de fonctionnement, un potentiel de danger déterminé à partir des informations de capteur est détecté et la puissance de l'entraînement (7) est étranglée, et dans un troisième état de fonctionnement du véhicule automobile (1), une probabilité d'accident déterminée à partir des informations de capteur est très élevée et le premier dispositif de commutation (15) se trouve dans le deuxième état de commutation, le deuxième dispositif de commutation (17) est présent dans le premier état de commutation et le troisième dispositif de commutation (19) est présent dans le deuxième état de commutation, de sorte que dans le troisième état de fonctionnement, l'alimentation électrique de l'entraînement (7) est toujours assurée par la deuxième unité d'alimentation électrique (5).

2. Dispositif de protection (13) selon la revendication 1, **caractérisé en ce que,** dans un quatrième état de fonctionnement du véhicule automobile (1) et dans un cinquième état de fonctionnement du véhicule automobile (1), le premier dispositif de commutation (15) se trouve dans le deuxième état de commutation, le deuxième dispositif de commutation (17) se trouve dans le premier état de commutation et le troisième dispositif de commutation (19) se trouve dans le premier état de commutation.

3. Dispositif de protection (13) selon l'une quelconque des revendications précédentes, **caractérisé en ce que,** dans un sixième état de fonctionnement du véhicule automobile (1), le premier dispositif de commutation (15) se trouve dans le deuxième état de commutation, le deuxième dispositif de commutation (17) se trouve dans le deuxième état de commutation et le troisième dispositif de commutation (19) se trouve dans le deuxième état de commutation.

4. Véhicule automobile (1) avec une première unité d'alimentation électrique (3), une deuxième unité d'alimentation électrique (5) montée en parallèle avec la première unité d'alimentation électrique (3) et conçue comme un condensateur, au moins un composant électrique, en particulier un entraînement électrique (7), et de préférence au moins un dispositif de capteur (9, 9', 9", 9"') et/ou une électronique de puissance (11), **caractérisée par** un dispositif de protection (13) selon l'une quelconque des revendications 1 à 8.

5. Procédé de fonctionnement d'un dispositif de protection (13), en particulier un dispositif de protection (13) selon l'une quelconque des revendications 1 à 8, dans lequel le dispositif de protection (13) présente un premier dispositif de commutation (15), dans lequel une connexion électrique d'une première unité d'alimentation électrique (3) d'un véhicule automobile (1) avec au moins un composant électrique du véhicule automobile (1), qui est conçu comme un entraînement électrique (7) du véhicule automobile (1), est créée dans un premier état de commutation du premier dispositif de commutation (15) et est interrompue dans un deuxième état de commutation du premier dispositif de commutation (15), avec un deuxième dispositif de commutation (17), dans lequel une connexion électrique entre une deuxième unité d'alimentation électrique (5) du véhicule automobile (1), qui est montée en parallèle avec la première unité d'alimentation électrique (3) par l'intermédiaire du premier dispositif de commutation (15) et du deuxième dispositif de commutation (17) et qui est conçue comme un condensateur, et l'au moins un composant électrique est créée dans un premier état de commutation du deuxième dispositif de commutation (17) et est interrompue dans un deuxième état de commutation du deuxième dispositif de commutation (17), avec un troisième dispositif de commutation (19), dans lequel une décharge de la deuxième unité d'alimentation électrique (5) est effectuée par un premier état de commutation du troisième dispositif de commutation (19) et la décharge de la deuxième unité d'alimentation électrique (5) est empêchée par un deuxième état de commutation du troisième dispositif de commutation (19), et avec un dispositif informatique (23), qui est connecté en communication avec au moins un dispositif de capteur (9, 9', 9", 9"') du véhicule automobile (1) et avec l'électronique de puissance (11) du véhicule automobile (1), au moyen duquel la puissance de l'entraînement (7) peut être commandée et/ou régulée, dans lequel le dispositif informatique (23) est conçu pour déterminer un état de fonctionnement du véhicule automobile (1) en fonction d'informations de capteur fournies par l'au moins un dispositif de capteur (9) et d'informations de puissance fournies par l'électronique de puissance (11), et pour activer le premier dispositif de commutation (15) et/ou le deuxième dispositif de commutation (17) et/ou le troisième dispositif de commutation (19) en fonction de l'état de fonctionnement pour qu'ils prennent chacun le premier état de commutation et/ou le deuxième état de commutation, et dans lequel, dans un premier état de fonctionnement du véhicule automobile (1) et dans un deuxième état de fonctionnement du véhicule automobile (1), le premier dispositif de commutation (15) se trouve dans le premier état de commutation, le deuxième dispositif de commutation (17) se trouve dans le premier état de commutation et le troisième dispositif de commutation (19) se trouve dans le deuxième état de commutation, dans lequel, dans le premier état de fonctionnement, une énergie maximale est fournie à l'entraînement (7) par la première unité d'alimentation électrique (3), **caractérisé en ce que,** dans le deuxième état de fonctionnement, un potentiel de danger déterminé à partir des informations de capteur est détecté et la puissance de l'entraînement (7) est étranglée, et dans un troisième état de fonctionnement du véhicule automobile (1), une probabilité d'accident déterminée à partir des informations de capteur est très élevée et le premier dispositif de commutation (15) se trouve dans le deuxième état de commutation, le deuxième dispositif de commutation (17) est présent dans le premier état de commutation et le troisième dispositif de commutation (19) est présent dans le deuxième état de commutation, de sorte que dans le troisième état de fonctionnement, l'alimentation électrique de l'entraînement (7) est toujours assurée par la deuxième unité d'alimentation électrique (5).
